(19) Europäisches Patentamt
European Patent Office
Office européen des brevets

(11) **EP 2 857 477 A1**

(12) **EUROPEAN PATENT APPLICATION**
published in accordance with Art. 153(4) EPC

(43) Date of publication:
08.04.2015 Bulletin 2015/15

(51) Int Cl.:
**C09K 5/06** (2006.01)

(21) Application number: 13798157.7

(22) Date of filing: 28.05.2013

(86) International application number:
**PCT/JP2013/003373**

(87) International publication number:
**WO 2013/179653 (05.12.2013 Gazette 2013/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 30.05.2012 JP 2012123594
28.06.2012 JP 2012145715
28.06.2012 JP 2012145775

(71) Applicant: JX Nippon Oil & Energy Corporation
Chiyoda-ku
Tokyo 100-8162 (JP)

(72) Inventors:
• YOSHIDA, Mizuho
Tokyo 100-8162 (JP)
• MORINAGA, Yoshihiro
Tokyo 100-8162 (JP)
• TSUTSUMI, Toshiyuki
Tokyo 100-8162 (JP)

(74) Representative: Thurston, Joanna et al
Withers & Rogers LLP
4 More London Riverside
London SE1 2AU (GB)

(54) **PARAFFIN-BASED LATENT HEAT STORING MATERIAL COMPOSITION AND USE THEREOF**

(57) The present invention provides a paraffin-based latent heat storage material composition that includes, as a main component, a mixture of n-hexadecane, n-pentadecane, and, optionally, n-tetradecane, in which 1) the mixture has the n-hexadecane content of 68 mass% or more, the n-pentadecane content of 1 mass% to 23 mass%, and the n-tetradecane content of 23 mass% or less, where the total sum of the n-hexadecane content, the n-pentadecane content, and the n-tetradecane content is 100 mass%, 2) the composition has a melting point lower than that of n-hexadecane, and 3) the composition has a latent heat of fusion of 200 J/g or more.

*FIG. 1*

## Description

TECHNICAL FIELD

The present invention relates to a paraffin-based latent heat storage material composition and use thereof, and in particular, to a paraffin-based latent heat storage material composition having a melting point that is lower than the melting point of n-hexadecane and close to the melting point of n-pentadecane (near 10 °C) and having a large latent heat of fusion, and use thereof.

BACKGROUND ART

There is an increasing demand for effective use of excess energy for energy saving and more efficient energy utilization. As an effective solution to meet this demand, methods have been used to achieve heat storage by making use of latent heat caused as the result of a phase change of a substance. Methods utilizing latent heat are more advantageous than methods using only sensible heat without a phase change, in the sense that the volume of heat storage material can be reduced because of the ability to store large amounts of thermal energy with a high density in a narrow temperature range, and that heat loss can be suppressed to a low level since the temperature variation is not large for their large heat storage capacity.

Such heat storage materials are used in, for example, heat storage type air conditioners, heat storage type building materials, a variety of heat insulating tools or devices, and refrigerants, making use of the heat absorbed or released at the time of a phase change between liquid and solid phases. The purpose of the heat storage material used can be achieved by setting its phase transition temperature (such as melting point and freezing point) to the desired temperature, such as a temperature close to room temperature, a temperature close to body temperature, and the like. Heat storage materials containing paraffin are conventionally known as latent heat storage material compositions that have latent heat of fusion caused as the result of a phase change.

Paraffins have a melting point and a freezing point within a normal temperature range for human life (5 °C to 30 °C). The melting point of a paraffin is determined by the number of carbon atoms. Generally, the latent heat of fusion of a paraffin with an odd number of carbon atoms that is available in the normal temperature range for human life (which is, for example, about 160 J/g for 15 carbon atoms) is smaller than that of a paraffin with an even number of carbon atoms (which is, for example, about 240 J/g for 16 carbon atoms). The reason is that a paraffin with an odd number of carbon atoms and a paraffin with an even number of carbon atoms have a different crystal system in solid state. In addition, supercooling occurs more easily in a paraffin with an even number of carbon atoms alone.

As mentioned above, the melting points and available latent heat of paraffins are different depending on the number of carbon atoms. For example, it is known that n-tetradecane (C14) has a melting point of 6 °C and a latent heat of about 230 J/g, n-pentadecane (C15) has a melting point of 10 °C and a latent heat of about 160 J/g, n-hexadecane (C16) has a melting point of 18 °C and a latent heat of about 240 J/g. Paraffines with melting points around 10 °C do not have a sufficiently large amount of latent heat.

On the other hand, paraffin mixtures are known to have melting points and freezing points that are not chemically convertible (see, for example, PTL 1). This also applies to the amount of latent heat.

Conventional examples include: (i) a cold and heat storage material that contains 10 wt% or more each of a normal paraffin component (A) having a number $C_n$ of carbon atoms and a normal paraffin component (B) having a number $C_{n+2}$ of carbon atoms, and less than 10 wt% of a normal paraffin component (C) having a number $C_{n+1}$ of carbon atoms, and that has a freezing point higher than a melting point (see, for example, PTL 1); (ii) a technique using a heat storage material dispersion obtained by microcapsulating a heat storage material (see, for example, PTL 2); (iii) a heat storage material made from a mixture of n-hexadecane (C16) and n-tetradecane (C14) (see, for example, PTL 3); (iv) a paraffin-based latent heat storage material composition that contains n-heptadecane (C17), n-octadecane (C18), and n-nonadecane (C19), that has a melting point in the range of 20 °C to 25 °C at the time of temperature rise, and that has an endothermic total latent heat of 200 J/g or more at the time of temperature rise in the range of 20 °C to 40 °C (see, for example, PTL 4); and (v) a paraffin-based heat storage material composition that is preferably used in air conditioners for cooling air, or the like and that contains a latent heat storage material (A) made from a normal paraffin (a) having a melting point in the range of -15 °C to 10 °C and a supercooling inhibitor (B) made from a normal paraffin (b) having a melting point being higher by 35 °C or more than that of the normal paraffin (a) (see, for example, PTL 5).

In recent years, demands are increasingly being made for a heat storage material for use in air conditioners for cooling air, canisters of automobiles, and the like that has a large latent heat (heat storage capacity) in a temperature range near 10 °C.

However, the latent heat of n-pentadecane (C15), which has a melting point near 10 °C (namely, 10 °C), is so small that prevents n-pentadecane (C15) from providing desired heat storage material.

In addition, even the two-component system of n-tetradecane (C14) and n-hexadecane (C16) is not chemically convertible in terms of melting point and/or latent heat as mentioned above, and has not attained a desired heat storage material.

As explained above, there have been strong demands in the conventional art for development of a paraffin-based latent heat storage material composition that has a melting point lower than the melting point of n-hexadecane and close to the melting point of n-pentadecane (near 10 °C) and that has a large latent heat of fusion, which has not yet been solved by the conventional art.

CITATION LIST

Patent Literature

PTL 1:    JPH06234967A
PTL 2:    JP2002241749A
PTL 3:    JPH05214329A
PTL 4:    JP2006321949A
PTL 5:    JP2009173834A

SUMMARY OF INVENTION

(Technical Problem)

An object of the present invention is to provide a paraffin-based latent heat storage material composition having a melting point lower than the melting point of n-hexadecane and close to the melting point of n-pentadecane (near 10 °C) and having a large latent heat of fusion, and use thereof.

(Solution to Problem)

In order to achieve the above object, the inventors of the present invention made intense study, and as a result found that for a composition containing predetermined amounts of n-hexadecane (C16), n-pentadecane (C15), and, optionally, n-tetradecane (C14), it is possible to obtain a paraffin-based latent heat storage material composition that has a melting point lower than the melting point of n-hexadecane (18 °C) and close to the melting point of n-pentadecane (near 10 °C) and that has a large latent heat of fusion (200 J/g or more). The present invention was completed based on this finding.

Specifically, a paraffin-based latent heat storage material composition according to the present invention may comprise, as a main component, a mixture of n-hexadecane, n-pentadecane, and, optionally, n-tetradecane, wherein

    1) the mixture contains 68 mass% or more of n-hexadecane, 1 mass% to 23 mass% of n-pentadecane, and 23 mass% or less of n-tetradecane, where the total content of n-hexadecane, n-pentadecane, and n-tetradecane is 100 mass%,
    2) the composition has a melting point lower than that of n-hexadecane, and
    3) the composition has a latent heat of fusion of 200 J/g or more.

Preferred embodiments of the paraffin-based latent heat storage material composition according to the present invention are as follows.

Preferably, in an embodiment of the present invention, a paraffin-based latent heat storage material composition comprises, as a main component, a mixture of n-hexadecane, n-pentadecane, and n-tetradecane, wherein

    1) the mixture contains more than 80 mass% of n-hexadecane, less than 5 mass% of n-pentadecane, and less than 20 mass% of n-tetradecane, where the total content of n-hexadecane, n-pentadecane, and n-tetradecane is 100 mass%,
    2) the composition has a melting point of 5 °C to 15 °C,
    3) the composition has a latent heat of fusion of 200 J/g or more, and
    4) the composition has a freezing point of 10 °C to 15 °C.

Preferably, in an embodiment of the present invention, a paraffin-based latent heat storage material composition comprises, as a main component, a mixture of n-hexadecane, n-pentadecane, and n-tetradecane, wherein

1) the mixture contains 70 mass% or more of n-hexadecane and less than 30 mass% in total of n-pentadecane and n-tetradecane, where the total content of n-hexadecane, n-pentadecane, and n-tetradecane is 100 mass%, and the content by mass% of n-pentadecane and the content by mass% of n-tetradecane satisfy the relation given by Expression (1):

$$0.3 \leq [\text{the content by mass\% of n-pentadecane}]/[\text{the content by mass\% of n-tetradecane}] \leq 10 \qquad \text{Expression (1)}$$

2) the composition has a melting point of 5 °C or higher to 15 °C or lower,
3) the compositing has a latent heat of fusion of 210 J/g or more,
4) the composition has a freezing point of 10 °C or higher and 15 °C or lower, and
5) the difference between the melting point and the freezing point is 5 °C or less.

Preferably, in an embodiment of the present invention, a paraffin-based latent heat storage material composition comprises, as a main component, a mixture of n-hexadecane and n-pentadecane, wherein

1) the mixture contains more than 80 mass% of n-hexadecane and less than 20 mass% of n-pentadecane, where the total content of n-hexadecane and n-pentadecane is 100 mass%,
2) the composition has a melting point of 10 °C to 16 °C,
3) the composition has a latent heat of fusion of 210 J/g or more, and
4) the difference between the melting point and the freezing point is 5 °C or less.

An embodiment of the present invention provides use of a paraffin-based latent heat storage material composition comprising, as a main component, a mixture of n-hexadecane, n-pentadecane, and, optionally, n-tetradecane, wherein

1) the mixture contains 68 mass% or more of n-hexadecane, 1 mass% to 23 mass% of n-pentadecane, and 23 mass% or less of n-tetradecane, where the total content of n-hexadecane, n-pentadecane, and n-tetradecane is 100 mass%,
2) the composition has a melting point lower than that of n-hexadecane, and
3) the composition has a latent heat of fusion of 200 J/g or more.

(Advantageous Effect of Invention)

According to the present invention, a paraffin-based latent heat storage material composition having a melting point lower than the melting point of n-hexadecane and close to the melting point of n-pentadecane (near 10 °C) and having a large latent heat of fusion may be obtained.

BRIEF DESCRIPTION OF DRAWINGS

The present invention will be further described below with reference to the accompanying drawings, wherein:

FIG. 1 schematically illustrates the composition range of the present invention for a mixed system of n-hexadecane (C16), n-pentadecane (C15), and n-tetradecane (C14);
FIG. 2 is an enlarged view schematically illustrating the main part of the composition range of the present invention for the mixed system of n-hexadecane (C16), n-pentadecane (C15), and n-tetradecane (C14);
FIG. 3 shows the model of a temperature-calorimetric curve (thermogram) obtained by a differential scanning calorimeter (DSC);
FIG. 4 shows a temperature-calorimetric curve (thermogram) of a paraffin-based latent heat storage material composition according to Example 1; and
FIG. 5 shows a model with two peaks observed in thermogram obtained by DSC.

DESCRIPTION OF EMBODIMENTS

(Paraffin-based Latent Heat Storage Material Composition)

A paraffin-based latent heat storage material composition according to the present invention comprises, as a main component, a mixture of n-hexadecane (C16), n-pentadecane (C15), and, optionally, n-tetradecane (C14), as well as other optional components.

<n-hexadecane (C16)>

In the mixture as the main component of the paraffin-based latent heat storage material composition, the content of n-hexadecane (C16) is not particularly limited and may be selected as necessary as long as it is 68 mass% or more. Preferably, the content thereof is in the range of 68 mass% to 99 mass%.
If the content of n-hexadecane is less than 68 mass%, a larger sub-peak forms in the sub-zero range, where a sufficient latent heat of fusion is not available.

<n-pentadecane (C15)>

In the mixture as the main component of the paraffin-based latent heat storage material composition, the content of n-pentadecane (C15) is not particularly limited and may be selected as necessary as long as it is in the range of 1 mass% to 23 mass%.

<n-tetradecane (C14)>

In the mixture as the main component of the paraffin-based latent heat storage material composition, n-tetradecane (C14) is optionally added. If this is the case, the content thereof is to be set to 23 mass% or less (from 0 mass% to 23 mass%). The content of n-tetradecane (C14) is not particularly limited and may be selected as necessary as long as it is 23 mass% or less.
If the content of n-tetradecane is more than 23 mass%, a larger sub-peak forms in the sub-zero range, where a sufficient latent heat of fusion is not available.

<First Preferred Embodiment>

The mixture as the main component of the paraffin-based latent heat storage material composition according to a first preferred embodiment contains more than 80 mass% of n-hexadecane (C16), less than 5 mass% of n-pentadecane (C15), and less than 20 mass% of n-tetradecane (C14), where the total content of n-hexadecane (C16), n-pentadecane (C15), and n-tetradecane (C14) is 100 mass%.

<<n-hexadecane (C16)>>

In the mixture as the main component of the paraffin-based latent heat storage material composition according to the first preferred embodiment, the content of n-hexadecane (C16) is not particularly limited and may be selected as necessary as long as it is more than 80.0 mass%. However, the content thereof is preferably more than 80.0 mass% and less than 98.0 mass%, and more preferably more than 82.0 mass% and less than 96.0 mass%.
If the content of n-hexadecane is not more than 80.0 mass%, a larger sub-peak forms in the sub-zero range, where a sufficient latent heat of fusion may not be available.
If the content of n-hexadecane is not less than 98.0 mass%, the melting point of the resulting material becomes too high to be suitable for a heat storage material used at temperatures close to 10 °C. The material may also be prone to a significant supercooling.

<<n-pentadecane (C15)>>

In the mixture as the main component of the paraffin-based latent heat storage material composition according to the first preferred embodiment, the content of n-pentadecane (C15) is not particularly limited and may be selected as necessary as long as it is less than 5.0 mass%. However, the content thereof is preferably 1.0 mass% or more and less than 5.0 mass%, and more preferably 1.0 mass% or more and less than 4.0 mass%.
If the content of n-pentadecane is not less than 5.0 mass%, a sufficient latent heat may not be available.

<<n-tetradecane (C14)>>

In the mixture as the main component of the paraffin-based latent heat storage material composition according to the first preferred embodiment, the content of n-tetradecane (C14) is not particularly limited and may be selected as necessary as long as it is less than 20.0 mass%. The content thereof is, however, preferably 1.0 mass% or more and less than 20.0 mass%, and more preferably 2.0 mass% or more and less than 15.0 mass%.

If the content of n-tetradecane is not less than 20.0 mass%, a larger sub-peak forms in the sub-zero range, where a sufficient latent heat of fusion may not be available.

If the content of n-tetradecane is less than 1.0 mass%, the melting point of the resulting material may be too high to be suitable for a heat storage material used at temperatures close to 10 °C.

<Second Preferred Embodiment>

The mixture as the main component of the paraffin-based latent heat storage material composition according to a second preferred embodiment contains 70 mass% or more of n-hexadecane and less than 30 mass% in total of n-pentadecane and n-tetradecane, where the total content of n-hexadecane, n-pentadecane, and n-tetradecane is 100 mass%, and the content by mass% of n-pentadecane and the content by mass% of n-tetradecane satisfy the relation given by Expression (1):

$$0.3 \leq \text{[the content by mass\% of n-pentadecane]}/\text{[the content by mass\% of n-tetradecane]} \leq 10 \qquad \text{Expression (1)}$$

<<n-hexadecane (C16)>>

In the mixture as the main component of the paraffin-based latent heat storage material composition according to the second preferred embodiment, the content of n-hexadecane (C16) is not particularly limited and may be selected as necessary as long as it is 70 mass% or more. The content thereof is, however, preferably 75 mass% or more, and more preferably 80 mass% or more. In addition, the content thereof is preferably 98 mass% or less, and more preferably 96 mass% or less.

If the content of n-hexadecane is less than 70 mass%, a larger sub-peak forms in a temperature range other than close to 10 °C, where a sufficient latent heat of fusion may not be available.

If the content of n-hexadecane is more than 98 mass%, the melting point of the resulting material may be too high to be suitable for a heat storage material used at temperatures close to 10 °C. The material may also be prone to a significant supercooling.

<<n-pentadecane (C15)>>

In the mixture as the main component of the paraffin-based latent heat storage material composition according to the second preferred embodiment, the content (B) of n-pentadecane (C15) is not particularly limited and may be selected as necessary as long as the total (A + B) of the content (A) of n-tetradecane, as described later, and the content (B) of n-pentadecane is less than 30 mass% and the ratio (B/A) of the content (B) of n-pentadecane to the content (A) of n-tetradecane is 0.3 or more and 10 or less. Preferably, the content (B) of n-pentadecane (C15) is 5 mass% or more.

If the content of the n-pentadecane (component B) is less than 5 mass%, the melting point may deviate from the desired range and/or a sufficient latent heat may not be available.

<<n-tetradecane (C14)>>

In the mixture as the main component of the paraffin-based latent heat storage material composition according to the second preferred embodiment, the content (A) of n-tetradecane (C14) is not particularly limited and may be selected as necessary as long as the total (A + B) of the content (A) of n-tetradecane and the content (B) of n-pentadecane is less than 30 mass% and the ratio (B/A) of the content (B) of n-pentadecane to the content (A) of n-tetradecane is 0.3 or more and 10 or less.

<Total (A + B) of the Content (A) of n-tetradecane (C14) and the Content (B) of n-pentadecane (C15)>

In the mixture as the main component of the paraffin-based latent heat storage material composition according to the second preferred embodiment, the total (A + B) of the content (A) of n-tetradecane (C14) and the content (B) of n-pentadecane (C15) is not particularly limited and may be selected as necessary as long as it is less than 30 mass%. However, the total content is preferably 25 mass% or less, and more preferably 20 mass% or less.

If the total content is not less than 30 mass%, a sufficient latent heat of fusion may not be available at temperatures close to 10 °C.

<Ratio (B/A) of the Content (B) of n-pentadecane (C15) to the Content (A) of n-tetradecane (C14)>

In the mixture as the main component of the paraffin-based latent heat storage material composition according to the second preferred embodiment, the ratio (B/A) of the content (B) of n-pentadecane (C15) to the content (A) of n-tetradecane (C14) is not particularly limited and may be selected as necessary as long as it is 0.3 or more and 10 or less. However, the ratio is preferably 0.5 or more, more preferably 0.8 or more, and even more preferably 1.0 or more. In addition, the ratio is preferably 8 or less, and more preferably 6 or less.

If the aforementioned content ratio is less than 0.3, the latent heat of fusion tends to be small and the difference between the melting point and the freezing point tends to be large. If the content ratio is more than 10, a sufficient latent heat of fusion may not be available. In contrast, the content ratio within the preferable, more preferable, or even more preferable range as identified above is advantageous in that the melting point is close to 10 °C, a large latent heat of fusion is available, and the difference between the melting point and the freezing point is small.

<Third Preferred Embodiment>

The mixture as the main component of the paraffin-based latent heat storage material composition according to a third preferred embodiment contains more than 80 mass% of n-hexadecane and less than 20 mass% of n-pentadecane, where the total content of n-hexadecane and n-pentadecane is 100 mass%.

<n-hexadecane (C16)>

In the mixture as the main component of the paraffin-based latent heat storage material composition according to the third preferred embodiment, the content of n-hexadecane (C16) is not particularly limited and may be selected as necessary as long as it is more than 80 mass%. However, the content thereof is preferably 85 mass% or more, and more preferably 87 mass% or more.

If the content of n-hexadecane is not more than 80 mass%, a larger sub-peak, whose melting point is out of the range of 10 °C to 16 °C, forms. In this case, a sufficient latent heat of fusion may not be available in the desired temperature range. In contrast, the content of n-hexadecane within the preferable or more preferable range as identified above is advantageous in that it reduces the difference between the melting point and the freezing point and provides a large amount of heat available in a narrower operation temperature range.

Additionally, in the mixture as the main component of the paraffin-based latent heat storage material composition according to the third preferred embodiment, the upper limit of the content of n-hexadecane is preferably 99 mass%, more preferably 98 mass%, and even more preferably 95 mass%, although it is not particularly limited and may be selected as necessary.

If the content of n-hexadecane is more than 99 mass%, the melting point may be too high to be suitable for a heat storage material used at temperatures in the range of 10 °C to 16 °C, and significant supercooling (where $\Delta T$ (melting point minus freezing point) is large) occurs easily, which may require a high performance refrigerator. In contrast, if the content of n-hexadecane is either 98 mass% or less or 95 mass% or less, supercooling is hardly or never caused, which is advantageous.

<n-pentadecane (C15)>

In the mixture as the main component of the paraffin-based latent heat storage material composition according to the third preferred embodiment, the content of n-pentadecane (C15) is not particularly limited and may be selected as necessary as long as it is less than 20 mass%. However, the content thereof is preferably 15 mass% or less, and more preferably 10 mass% or less.

If the content of n-hexadecane is not less than 20 mass%, a sub-peak, whose melting point is out of the range of 10 °C to 16 °C, forms. In this case, a sufficient latent heat of fusion may not be available in the desired temperature range. In contrast, the content of n-pentadecane within the preferable or more preferable range as identified above is advantageous in that it reduces the difference between the melting point and the freezing point and makes a large amount of heat available in a narrower operation temperature range. Additionally, in the mixture as the main component of the paraffin-based latent heat storage material composition according to the third preferred embodiment, the lower limit of the content of n-pentadecane is preferably 1 mass%, more preferably 2 mass%, and even more preferably 5 mass%, although it is not particularly limited and may be selected as necessary.

If the content of n-pentadecane is less than 1 mass%, the melting point may be too high to be suitable for a heat storage material used at temperatures in the range of 10 °C to 16 °C, and significant supercooling (where $\Delta T$ (melting point minus freezing point) is large) may occur easily, which may require a high performance refrigerator. In contrast, if the content of n-pentadecane is either 2 mass% or more or 5 mass% or more, supercooling is hardly or never caused, which is advantageous.

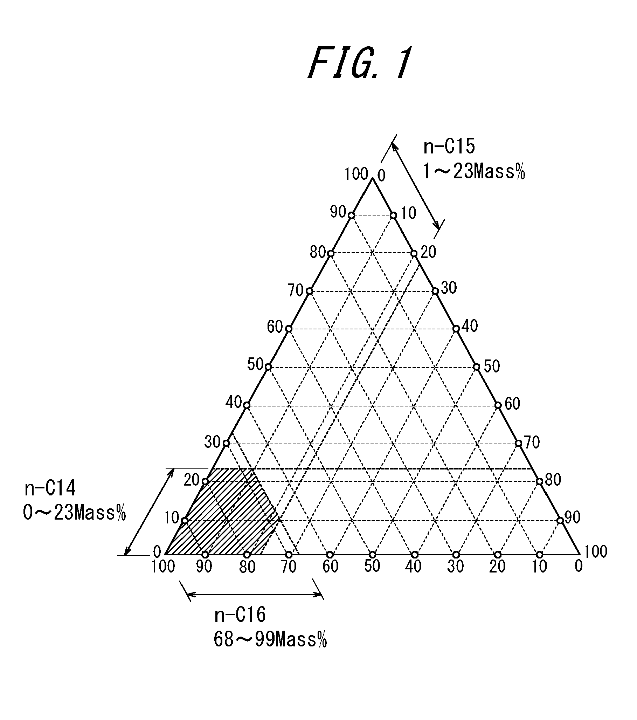

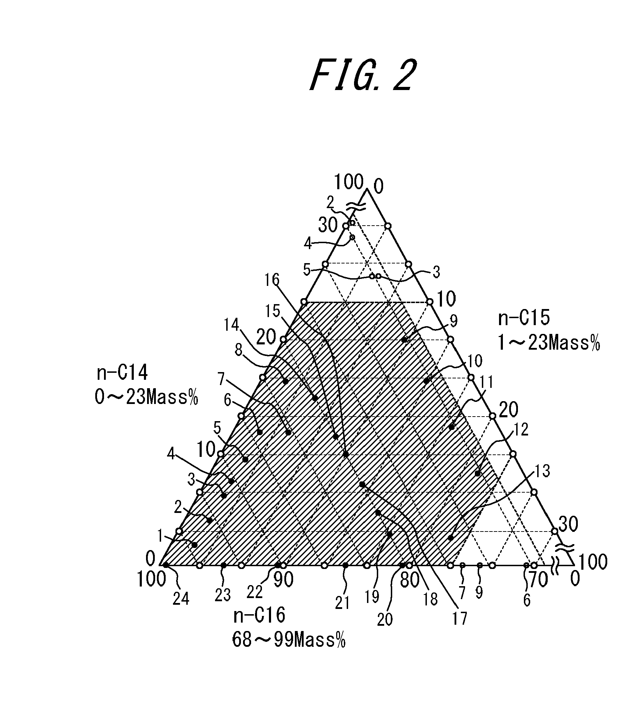

FIG. 1 is a triangular graph schematically illustrating the composition range of the present invention, where the shaded area indicates a mixed system of n-hexadecane (C16), n-pentadecane (C15), and n-tetradecane (C14). FIG. 2 is an enlarged view of the main part thereof. In FIG. 2, numerals pointing to black dots correspond to the numbers of examples described below, and numerals to white dots correspond to the numbers of comparative examples stated below. While the reason for excellent properties being obtained in this area is unclear, the inventors of the present invention believe that this phenomenon is caused by interaction, during the phase transition of melting and freezing, of an n-paraffin with an even number of carbon atoms, an n-paraffin with an odd number of carbon atoms, and an n-paraffin with an even number of carbon atoms, where the even and odd numbers are close to one another.

<Other Components>

Other components contained in the paraffin-based latent heat storage material composition include, without compromising the object of the present invention: (i) normal paraffins with a number other than 14 to 16 of carbon atoms; (ii) hydrocarbons, such as isoparaffin, olefin, naphthene, and aromatic compounds, having a structure other than those of the aforementioned n-hexadecane (C16), n-pentadecane (C15), and n-tetradecane (C14); and (iii) alcohols incorporated when preparing a normal paraffin.

In addition, the following materials can be added (externally added) to produce products by using the paraffin-based latent heat storage material composition according to the present invention: (i) substances including resin monomers, polymerizing agents, and surfactants that are used to produce applied products such as microcapsules; (ii) commonly-used additives, including antioxidants and ultraviolet absorbers; (iii) additives, including specific gravity control agents, colorants such as pigments and dyes, aromatics, and gelling agents; and so on.

<Addition of Long-chain Paraffin>

The paraffin-based latent heat storage material composition according to the present invention is such a paraffin-based latent heat storage material composition that contains n-hexadecane (C16) having the longest chain length and other n-paraffins substantially limited to n-pentadecane (C15) and n-tetradecane (C14).

After the investigations, the inventors found that an interaction with a long-chain paraffin of C 17 or more during the phase transition of melting and the like greatly reduces the latent heat of fusion available in the present invention.

Here, examples of the long-chain paraffin of C17 or more include a part having a long-chain paraffin structure, such as a crystalline part in a polymerized portion of crystalline polyethylene. When the composition according to the present invention is used as a latent heat storage material, such interaction with a long-chain paraffin of C17 or more should be avoided as much as possible.

<Latent Heat of Fusion (Heat of Fusion)>

The aforementioned latent heat of fusion (heat of fusion) means the amount of latent heat involved in a phase transition from solid to liquid phase. As used herein, the latent heat of fusion means the amount of heat at a melting (endothermic) peak observed in a DSC thermogram, and for a DSC thermogram showing multiple peaks, it refers to the amount of heat at a peak (main peak) with a melting point of 0 °C or higher and a large amount of heat. The latent heat of fusion of the aforementioned paraffin-based latent heat storage material composition can be determined by, for example, the melting peak on the DSC thermogram that is measured at a heating rate of 10 °C/min, using a differential scanning calorimeter (DSC7020 manufactured by Seiko Instruments Inc.).

The latent heat of fusion of the paraffin-based latent heat storage material composition is not particularly limited and may be selected as necessary as long as it is 200 J/g or more. However, the latent heat of fusion is preferably 210 J/g or more, more preferably 220 J/g or more, and most preferably 230 J/g or more.

If the latent heat of fusion is less than 200 J/g, the amount of effective latent heat (heat storage capacity) is so small that may prevent the composition from having sufficient effect when used in air conditioners for cooling air, refrigeration and cold storage containers, cold energy transportation media, antifreezing agents, and the like.

<Melting Point>

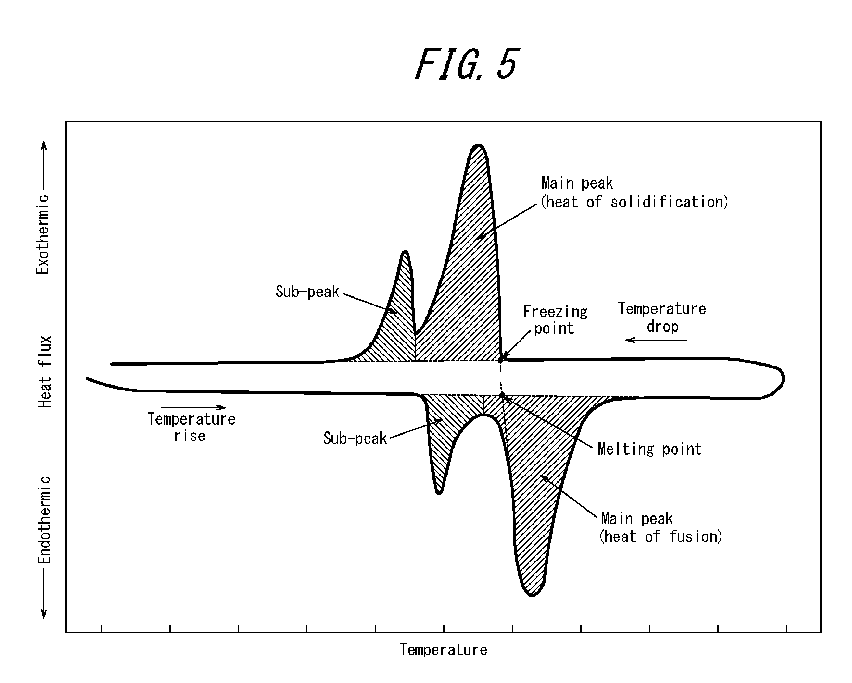

As used herein, the melting point refers to the temperature at a point where the tangent of the maximum slope of the melting (endothermic) peak in a thermogram, which is obtained using a differential scanning calorimeter (for example, DSC7020 manufactured by Seiko Instruments Inc.) when heating is performed at a heating rate of 10 °C/min, intersects the baseline. The melting point of the paraffin-based latent heat storage material composition (normal paraffin composition) can be normally represented by a single point even when the composition contains many components. However, in the case where two or more peaks are observed, the melting point refers to the temperature at which the tangent of the maximum slope of one of the peaks (main peak) that is observed at the temperatures side higher than 0 °C and that has a large amount of heat intersects the baseline (see FIG. 5).

The melting point of the paraffin-based latent heat storage material composition is preferably 5 °C to 16 °C, more preferably 5 °C to 15 °C, and most preferably 7 °C to 13 °C, although it is not particularly limited and may be selected as necessary as long as it is lower than the melting point (18 °C) of n-hexadecane.

If the melting point is not lower than the melting point (18 °C) of n-hexadecane, the melting point may be too high to be suitable for a heat storage material for cooling. In addition, if the melting point is lower than 5 °C, the composition may melt at a temperature lower than the temperature close to 10 °C at which it is to be used, while a melting point higher than 16 °C be too high to be suitable for a heat storage material for cooling. In contrast, if the melting point is within the aforementioned particularly preferable range, the composition can be used with a refrigerator of reasonable performance and used in an optimum temperature range for a heat storage material for cooling.

Note that a paraffin-based latent heat storage material composition (normal paraffin composition) showing two or more distinct melting peaks when measured by a differential scanning calorimeter is not preferably used as the paraffin-based latent heat storage material composition according to the present invention.

<Freezing Point>

As used herein, the freezing point refers to the temperature at a point where the tangent of the maximum slope of the freezing (exothermic) peak in a thermogram, which is obtained using a differential scanning calorimeter (for example, DSC7020 manufactured by Seiko Instruments Inc.) when cooling is performed at a cooling rate of 10 °C/min, intersects the baseline. The freezing point of the paraffin-based latent heat storage material composition (normal paraffin composition) can be normally represented by a single point even when the composition contains many components. However, in the case where two or more peaks are observed, the freezing point refers to the temperature at which the tangent of the maximum slope of one of the peaks (main peak) that is observed at the temperature side higher than 0 °C and that has a large amount of heat intersects the baseline (see FIG. 5).

The freezing point of the paraffin-based latent heat storage material composition is not particularly limited and may be selected as necessary. However, the freezing point is preferably 10 °C to 16 °C, more preferably 10 °C to 15 °C, and most preferably 12 °C to 14 °C.

If the freezing point is lower than 10 °C, the heat storage material cannot solidify without using a high performance refrigerator, placing a higher load on the refrigerator, while if the freezing point is higher than 16 °C, the amount of latent heat which is available at temperatures close to 10 °C may decrease.

<Heat of Solidification>

The heat of solidification means the amount of latent heat involved in a phase transition from liquid to solid phase. As used herein, the heat of solidification means the amount of heat at a freezing (exothermic) peak observed in a DSC thermogram, and for a DSC thermogram showing multiple peaks, it refers to the amount of heat at a peak (main peak) with a freezing point of 0 °C or higher and a large amount of heat.

The heat of solidification of the aforementioned paraffin-based latent heat storage material composition can be determined by, for example, the melting peak on the DSC thermogram that is measured at a cooling rate of 10 °C/min, using a differential scanning calorimeter (DSC7020 manufactured by Seiko Instruments Inc.).

The heat of solidification of the aforementioned paraffin-based latent heat storage material composition is not particularly limited and may be selected as necessary. However, the heat of solidification is preferably 160 J/g or more, more preferably 200 J/g or more, even more preferably 210 J/g or more, and most preferably 220 J/g or more.

If the heat of solidification is less than 160 J/g, the effective heat storage capacity is so small that may prevent the composition from having sufficient effect when used in air conditioners for cooling air, refrigeration and cold storage containers, cold energy transportation media, antifreezing agents, and the like.

<Difference between Melting Point and Freezing Point>

The aforementioned difference between the melting point and the freezing point refers to the result of the higher minus the lower of the melting point and the freezing point ("the higher temperature of the melting point and the freezing point" - "the lower temperature of the melting point and the freezing point").

The aforementioned difference between the melting point and the freezing point is not particularly limited and may be selected as necessary. However, the difference is preferably 5 °C or less, more preferably 4 °C or less, even more preferably 3 °C or less, and most preferably 1 °C or less.

If the difference between the melting point and the freezing point is greater than 5 °C, the operation temperature range may be excessively broad, making it difficult to achieve efficient absorption and release of latent heat in the desired temperature range. In contrast, if the aforementioned difference between the melting point and the freezing point is within the more preferable or particularly preferably range as identified above, it is possible to make use of repetitive absorption and release of a large amount of latent heat in a narrow operation temperature range, which is advantageous.

The paraffin-based latent heat storage material composition according to the present invention has a melting point close to the melting point of n-pentadecane (near 10 °C) and has a large latent heat of fusion. Additionally, the paraffin-based latent heat storage material composition is stable even when subjected to repetitive fusion and solidification phase changes, and is not corrosive.

EXAMPLES

The present invention will be described further in detail hereinafter with reference to examples. However, the present invention is not limited to the disclosed examples in any way.

Paraffin-based latent heat storage material compositions were prepared by blending predetermined amounts of commercially available n-hexadecane, n-pentadecane, and n-tetradecane. Each of the n-paraffins has a purity of approximately 95 % to 98 %, and generally, the n-paraffins include n-paraffins with a close number of carbon atoms.

Regarding the examples and comparative examples, gas chromatography analysis was carried out for reference purpose to investigate the actual compositions based on the peak areas, respectively.

The actual composition values determined from the peak areas by gas chromatography analysis are shown in brackets ([ ]) in Tables 1 to 3. Tables 1 to 3 show some cases where the sum total of values in brackets does not equal 100, indicating that peaks other than those of n-hexadecane (C16), n-pentadecane (C15), and n-tetradecane (C14) are detected (in this regard, the inventors estimate that the residual parts are contained in the respective reagents).

For each composition, measurements were made of its melting point, latent heat of fusion, freezing point, heat of solidification, and the difference between the melting point and the freezing point. The measurement results are shown in FIGS. 1 and 2 and Tables 1 to 3.

[Table 1]

Table 1

| | Formulation (%) [% by GC analysis = area ratio] | | | | Melting Point (°C) | Latent Heat of Fusion (J/g) | Freezing Point (°C) | Heat of Solidification (J/g) | Difference between Melting Point and Freezing Point (°C) |
|---|---|---|---|---|---|---|---|---|---|
| | n-C16 | n-C15 | n-C14 | | | | | | |
| n-C16 | 99.9 [99.6] | 0.1 [0.1] | 0.0 [0.0] | ---- | 17 | 238 | 15 | 235 | 2 |
| Example 1 | 96.4 [96.0] | 1.7 [1.7] | 1.9 [1.9] | ---- | 15 | 237 | 14 | 233 | 1 |
| Example 2 | 94.5 [94.1] | 1.7 [1.7] | 3.9 [3.8] | ---- | 14 | 239 | 14 | 235 | 0 |
| Example 3 | 92.5 [92.1] | 1.7 [1.6] | 5.9 [5.9] | ---- | 13 | 233 | 14 | 228 | 1 |
| Example 4 | 90.6 [903] | 1.6 [1.6] | 7.8 [7.8] | ---- | 11 | 231 | 13 | 227 | 2 |
| Example 5 | 88.6 [88.3] | 1.6 [1.6] | 9.8 [9.8] | ---- | 11 | 223 | 13 | 218 | 2 |
| Example 6 | 86.6 [86.3] | 1.6 [1.5] | 11.9 [11.9] | ---- | 10 | 222 | 13 | 218 | 3 |
| Example 7 | 83.7 [83.1] | 4.4 [4.4] | 12.0 [11.9] | ---- | 7 | 218 | 12 | 213 | 5 |
| Example 8 | 82.7 [82.4] | 1.5 [1.5] | 15.8 [15.8] | ---- | 6 | 219 | 12 | 214 | 6 |
| n-C15 | 0.0 [0.0] | 99.6 [99.3] | 0.4 [0.4] | ---- | 8 | 174 | 8 | 178 | 0 |
| n-C14 | 0.0 [0.0] | 0.1 [0.1] | 99.9 [99.7] | ---- | 4 | 235 | 1 | 230 | 3 |
| Comparative Example 1 | 49.2 [49.0] | 0.9 [0.9] | 49.9 [49.8] | ---- | 1 | 174 | 6 | 169 | 5 |
| Comparative Example 2 | 68.9 [68.6] | 1.2 [1.2] | 29.9 [29.8] | ---- | 3 | 193 | 9 | 189 | 6 |
| Comparative Example 3 | 69.8 [69.4] | 5.1 [5.1] | 25.1 [24.9] | ---- | 5 | 195 | 10 | 159 | 5 |

[Table 2]

Table 2

| | Formulation (%) [% by GC analysis = area ratio] | | | n-C15/n-C14 | Melting Point (°C) | Latent Heat of Fusion (J/g) | Freezing Point (°C) | Heat of Solidification (J/g) | Difference between Melting Point and Freezing Point (°C) |
|---|---|---|---|---|---|---|---|---|---|
| | n-C16 | n-C15 | n-C14 | | | | | | |
| Example 9 | 71 [70] | 9 [9] | 20 [20] | 0.45 | 6 | 210 | 10 | 160 | 4 |
| Example 10 | 71 [71] | 13 [13] | 16 [16] | 0.81 | 7 | 210 | 11 | 161 | 4 |
| Example 11 | 71 [71] | 17 [17] | 12 [12] | 1.42 | 8 | 213 | 11 | 161 | 3 |
| Example 12 | 71 [71] | 21 [21] | 8 [8] | 2.63 | 9 | 213 | 11 | 160 | 2 |
| Example 13 | 75 [75] | 22 [22] | 3 [3] | 7.33 | 10 | 225 | 12 | 160 | 2 |
| Example 14 | 80 [79] | 5 [5] | 15 [15] | 0.35 | 6 | 215 | 11 | 211 | 5 |
| Example 15 | 80 [80] | 8 [8] | 12 [12] | 0.67 | 7 | 215 | 12 | 208 | 5 |
| Example 16 | 80 [79] | 10 [10] | 10 [10] | 1.00 | 8 | 222 | 12 | 217 | 4 |
| Example 17 | 80 [80] | 13 [13] | 7 [7] | 1.86 | 9 | 221 | 12 | 217 | 3 |
| Example 18 | 80 [79] | 15 [15] | 5 [5] | 3.00 | 9 | 221 | 13 | 218 | 4 |
| Example 19 | 80 [80] | 17 [17] | 3 [3] | 5.67 | 10 | 229 | 13 | 225 | 3 |
| Comparative Example 4 | 69 [69] | 1 [1] | 30 [30] | 0.03 | 3 | 193 | 9 | 189 | 6 |
| Comparative Example 5 | 70 [69] | 5 [5] | 25 [25] | 0.20 | 5 | 195 | 10 | 159 | 5 |
| Comparative Example 6 | 70 [70] | 30 [30] | ---- | --- | 12 | 165 | 12 | 167 | 0 |
| Comparative Example 7 | 76 [75] | 24 [24] | ---- | --- | 13 | 167 | 13 | 160 | 0 |

[Table 3]

Table 3

| | Formulation (%) [% by GC analysis = area ratio] | | | | Melting Point (°C) | Latent Heat of Fusion (J/g) | Freezing Point (°C) | Heat of Solidification (J/g) | Difference between Melting Point and Freezing Point (°C) |
|---|---|---|---|---|---|---|---|---|---|
| | n-C16 | n-C15 | ---- | | | | | | |
| Example 20 | 81 [81] | 19 [19] | ---- | ---- | 11 | 235 | 13 | 230 | 2 |
| Example 21 | 86 [85] | 14 [14] | ---- | ---- | 12 | 234 | 14 | 231 | 2 |
| Example 22 | 91 [90] | 9 [9] | ---- | ---- | 13 | 237 | 14 | 234 | 1 |
| Example 23 | 95 [95] | 5 [5] | ---- | ---- | 15 | 235 | 14 | 232 | 1 |
| Example 24 | 98 [98] | 2 [2] | ---- | ---- | 16 | 232 | 15 | 229 | 1 |
| n-C15 | 0 [0] | 100 [99] | ---- | ---- | 8 | 174 | 8 | 178 | 0 |
| Comparative Example 8 | 49 [49] | 51 [50] | ---- | ---- | 9 | 177 | 10 | 179 | 1 |
| Comparative Example 9 | 76 [75] | 24 [24] | ---- | ---- | 13 | 167 | 13 | 160 | 0 |

It can be seen from the results shown in FIGS. 1 and 2 and Tables 1 to 3 that regarding the compositions according to the examples which satisfy the composition conditions as specified in the present invention, the latent heat of fusion is greater than 200 J/g, the melting point is lower than that of n-hexadecane (18 °C), supercooling does not occur, the difference between the melting point and the freezing point is as small as 6 °C or less, and the operation temperature range is narrow, as compared to the compositions according to the comparative examples not satisfying the composition conditions of the present invention.

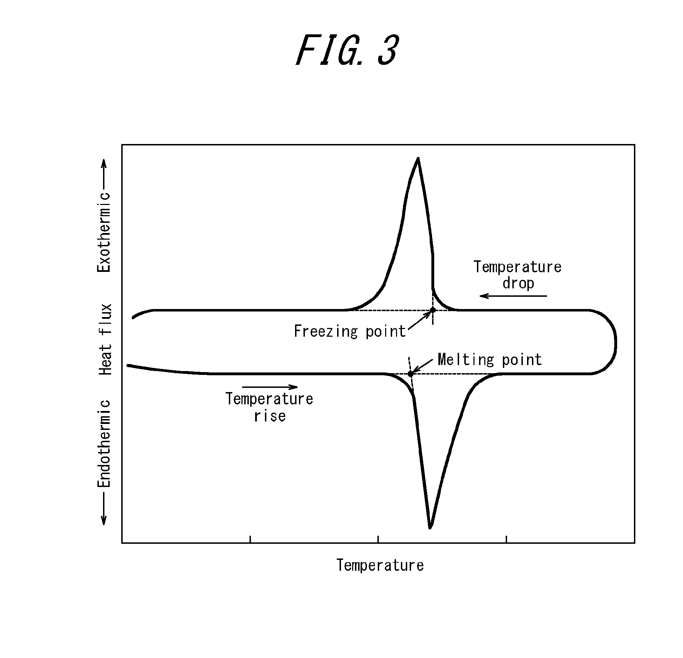

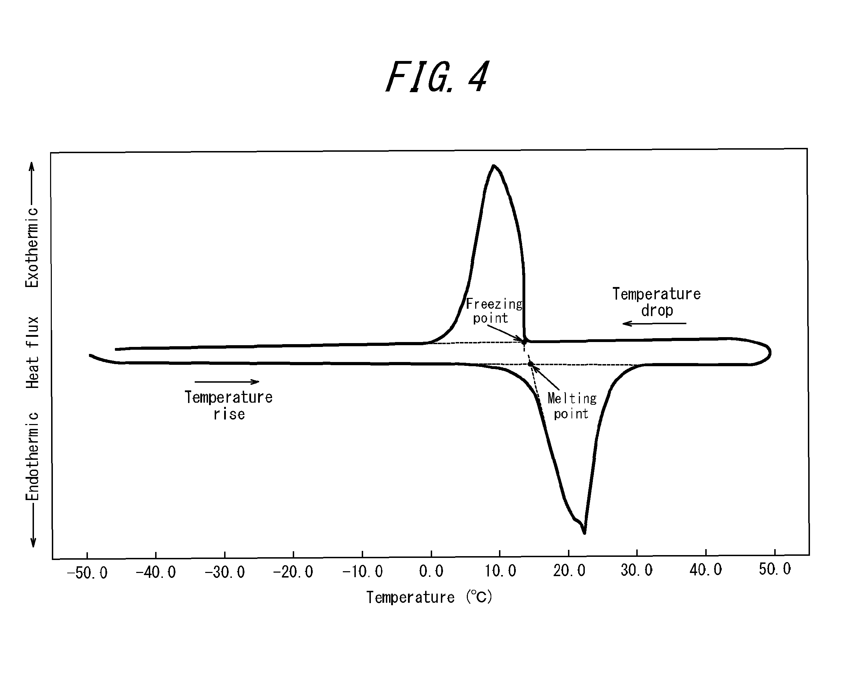

Note that the melting point, heat of fusion (latent heat of fusion), freezing point, and heat of solidification shown in the tables were measured at a heating rate of 10 °C/min and a cooling rate of 10 °C/min using a differential scanning calorimeter, DSC7020 manufactured by Seiko Instruments Inc. FIG. 3 shows the model of a temperature-calorimetric curve (thermogram) obtained by the differential scanning calorimeter (DSC), and FIG. 4 shows a thermogram of a paraffin-based latent heat storage material composition according to Example 1.

In this case, (i) the melting point refers to the temperature at a point where the tangent of the maximum slope of the melting (endothermic) peak in the DSC thermogram obtained when heating was performed at a heating rate of 10 °C/min intersects the baseline, (ii) the heat of fusion refers to the amount of heat determined from the melting peak area on the DSC thermogram when measurement was made at a heating rate of 10 °C/min, (iii) the freezing point refers to the temperature at a point where the tangent of the maximum slope of the freezing (exothermic) peak in the DSC thermogram obtained when cooling was performed at a cooling rate of 10 °C/min intersects the baseline, and (iv) the heat of solidification refers to the amount of heat determined from the freezing peak area on the DSC thermogram when measurement was made at a cooling rate of 10 °C/min.

Some compositions show two melting and/or freezing peaks on the DSC thermogram. FIG. 5 shows the model of a DSC thermogram having two such peaks. In this case, for respective two peaks, a main peak and a sub-peak are defined by dropping a perpendicular to the baseline from the valley point between the two peaks, and a tangent is drawn to the main peak as shown in FIG. 5 to determine the melting point and the freezing point. In this way, the heat of fusion and the heat of solidification are determined from the areas of the main peaks defined by the perpendiculars, respectively. Many of the paraffin-based latent heat storage material compositions according to the comparative examples showed such two peaks on the DSC thermograms.

INDUSTRIAL APPLICABILITY

The paraffin-based latent heat storage material composition according to the present invention will not change its properties, nor will separation occur even when subjected to repetitive fusion and solidification, where the composition conditions remain stable, and therefore, the composition has less impact on the container and piping systems in contact therewith, and is preferably used as a latent heat storage material (PCM) that requires, in particular, highly precise melting-freezing temperature properties in a narrow temperature range.

In addition, the paraffin-based latent heat storage material composition according to the present invention is preferably used in, particularly, air conditioners for cooling air, canisters of automobiles, and the like (5 °C to 15 °C), and otherwise, preferably used as a heat storage material for use in refrigeration and cold storage containers, cold energy transportation media, antifreezing agents, and the like.

**Claims**

1. A paraffin-based latent heat storage material composition comprising, as a main component, a mixture of n-hexadecane, n-pentadecane, and, optionally, n-tetradecane, wherein

   1) the mixture contains 68 mass% or more of n-hexadecane, 1 mass% to 23 mass% of n-pentadecane, and 23 mass% or less of n-tetradecane, where the total content of n-hexadecane, n-pentadecane, and n-tetradecane is 100 mass%,
   2) the composition has a melting point lower than that of n-hexadecane, and
   3) the composition has a latent heat of fusion of 200 J/g or more.

2. A paraffin-based latent heat storage material composition comprising, as a main component, a mixture of n-hexadecane, n-pentadecane, and n-tetradecane, wherein

   1) the mixture contains more than 80 mass% of n-hexadecane, less than 5 mass% of n-pentadecane, and less than 20 mass% of n-tetradecane, where the total content of n-hexadecane, n-pentadecane, and n-tetradecane is 100 mass%,
   2) the composition has a melting point of 5 °C to 15 °C,
   3) the composition has a latent heat of fusion of 200 J/g or more, and
   4) the composition has a freezing point of 10 °C to 15 °C.

3. A paraffin-based latent heat storage material composition comprising, as a main component, a mixture of n-hexadecane, n-pentadecane, and n-tetradecane, wherein

   1) the mixture contains 70 mass% or more of n-hexadecane and less than 30 mass% in total of n-pentadecane and n-tetradecane, where the total content of n-pentadecane, n-tetradecane, and n-hexadecane is 100 mass%, and the content by mass% of n-pentadecane and the content by mass% of n-tetradecane satisfy the relation given by Expression (1):

$$0.3 \leq [\text{the content by mass\% of n-pentadecane}]/[\text{the content by mass\% of n-tetradecane}] \leq 10 \qquad \text{Expression (1)}$$

   2) the composition has a melting point of 5 °C or higher to 15 °C or lower,
   3) the composition has a latent heat of fusion of 210 J/g or more,
   4) the composition has a freezing point of 10 °C or higher to 15 °C or lower, and
   5) the difference between the melting point and the freezing point is 5 °C or less.

4. A paraffin-based latent heat storage material composition comprising, as a main component, a mixture of n-hexadecane and n-pentadecane, wherein

   1) the mixture contains more than 80 mass% of n-hexadecane and less than 20 mass% of n-pentadecane, where the total content of n-hexadecane and n-pentadecane is 100 mass%,
   2) the composition has a melting point of 10 °C to 16 °C,
   3) the composition has a latent heat of fusion of 210 J/g or more, and
   4) the difference between the melting point and the freezing point is 5 °C or less.

5. Use of a paraffin-based latent heat storage material composition comprising, as a main component, a mixture of n-hexadecane, n-pentadecane, and, optionally, n-tetradecane, wherein

1) the mixture contains 68 mass% or more of n-hexadecane, 1 mass% to 23 mass% of n-pentadecane, and 23 mass% or less of n-tetradecane, where the total content of n-hexadecane, n-pentadecane, and n-tetradecane is 100 mass%,
2) the composition has a melting point lower than that of n-hexadecane, and
3) the composition has a latent heat of fusion of 200 J/g or more.

## FIG. 1

n–C15
1～23Mass%

n–C14
0～23Mass%

n–C16
68～99Mass%

# FIG. 2

# FIG. 3

## FIG. 4

EP 2 857 477 A1

FIG. 5

## INTERNATIONAL SEARCH REPORT

| | International application No. |
|---|---|
| | PCT/JP2013/003373 |

**A. CLASSIFICATION OF SUBJECT MATTER**
*C09K5/06(2006.01)i*

According to International Patent Classification (IPC) or to both national classification and IPC

**B. FIELDS SEARCHED**

Minimum documentation searched (classification system followed by classification symbols)
C09K5/06

Documentation searched other than minimum documentation to the extent that such documents are included in the fields searched

| Jitsuyo Shinan Koho | 1922-1996 | Jitsuyo Shinan Toroku Koho | 1996-2013 |
|---|---|---|---|
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 9-176623 A (Mitsubishi Paper Mills Ltd.),<br>08 July 1997 (08.07.1997),<br>example 2<br>& US 5916478 A & DE 19654035 A1 | 1,4-5<br>2-3 |
| X<br>A | JP 2006-316194 A (Kabushiki Kaisha Hasec),<br>24 November 2006 (24.11.2006),<br>claims; paragraph [0067]; examples 2 to 4<br>(Family: none) | 2<br>1,3-5 |
| A | JP 6-234967 A (Nippon Petrochemicals Co.,<br>Ltd.),<br>23 August 1994 (23.08.1994),<br>claims; example 11; comparative examples 3, 9<br>(Family: none) | 1-5 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22 August, 2013 (22.08.13) | 03 September, 2013 (03.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/003373 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-42040 A  (Harima Chemicals, Inc.), 17 February 2005 (17.02.2005), claims; example 4; comparative example 2 (Family: none) | 1-5 |
| A | JP 2005-171031 A  (Toho Chemical Industry Co., Ltd.), 30 June 2005 (30.06.2005), claims; example 2; comparative example 5 (Family: none) | 1-5 |
| A | JP 6-346047 A  (Mitsubishi Cable Industries, Ltd.), 20 December 1994 (20.12.1994), claims; example 1; comparative example 1 (Family: none) | 1-5 |
| A | JP 2005-306968 A  (Dai-Ichi Kogyo Seiyaku Co., Ltd.), 04 November 2005 (04.11.2005), claims; examples 10 to 12 (Family: none) | 1-5 |
| A | JP 2004-168792 A  (Nippon Shokubai Co., Ltd.), 17 June 2004 (17.06.2004), claims; examples (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06234967 A
- JP 2002241749 A
- JP H05214329 A
- JP 2006321949 A
- JP 2009173834 A